# FASCICULE DE BREVET EUROPEEN

(11) **EP 0 546 896 B1**
(45) Date de publication et mention de la délivrance du brevet: **17.05.1995**
(21) Numéro de dépôt: 92403265.9
(22) Date de dépôt: 03.12.1992
(51) Int. Cl.: B60N 2/14

(54) **Base tournante à sécurité permettant la rotation de 180 degrés d'un siège dans un véhicule automobile ou analogue**
Drehbares Sicherheitstraggestell zur 180 Grad-Drehung eines Sitzes in einem Kraftfahrzeug oder dergleichen
Safety swivel base for 180 degrees rotation of a seat in an automotive vehicle or the like

(30) Priorité: 10.12.1991 FR 9115288
(43) Date de publication de la demande: 16.06.1993
(73) Titulaire: BERTRAND FAURE AUTOMOBILE "B.F.A.", F-91300 Massy (FR)
(72) Inventeur: Forget, Dominique, F-61440 Echalou (FR)
(74) Mandataire: Madeuf, René Louis

(56) Documents cités:
- AU-B- 7 740 881
- US-A- 3 338 622
- US-A- 4 834 452
- PATENT ABSTRACTS OF JAPAN vol. 8, no. 35 (M-276)(1472) 15 Février 1984 & JP-A-58 191 637 (TACHIKAWA SPRINGS) 8 novembre 1983

## Description

On utilise maintenant très souvent des véhicules dont l'habitacle peut contenir six, sept et même huit personnes sans que ces véhicules soient considérés, par les règlements internationaux, comme des véhicules de transport en commun.

Ainsi, se sont multipliés des véhicules connus dans le commerce sous le nom de "Minibus", "Espace", "Voyager", etc qui permettent de placer transversalement trois sièges contigus de sorte que la rangée du fond reçoive trois voyageurs de même que la rangée intermédiaire, les deux sièges avant étant destinés, l'un, à un passager et l'autre, au conducteur.

Ces véhicules sont, en général, équipés, lorsqu'ils sont utilisés pour les affaires, d'un téléphone, d'un appareil de facsimilé, et peuvent même recevoir parfois des émissions de télévision sur des écrans disposés convenablement sous le pavillon du véhicule. On peut ainsi préparer ou prolonger une réunion entre, par exemple, un aéroport et une salle de réunion.

On a donc été amené à prévoir la rotation de 180° du siège du passager avant et des sièges intermédiaires pour pouvoir ainsi organiser, entre six et sept personnes, une séance de travail.

De tels véhicules peuvent également être utilisés comme véhicules familiaux et il est parfois agréable à la mère de famille de pouvoir discuter aisément avec ses enfants et les accompagnateurs de ses enfants afin de distraire ceux-ci au cours d'un long voyage.

Jusqu'à présent, on avait monté le ou les sièges pivotants sur des bases tournantes simples. Ces dernières n'étaient pas équipées de dispositifs de sécurité, de sorte qu'une base tournante pouvait pivoter sur elle-même indépendamment de la position du siège, ce qui entraînait des difficultés de rotation du siège considéré, car il pouvait ainsi buter sur d'autres sièges ou sur d'autres parties de l'habitacle du véhicule.

La présente invention remédie à cet inconvénient en créant une base tournante qui permet la rotation du siège considéré, uniquement lorsque celui-ci est dans une position particulière permettant le déverrouillage d'un mécanisme assurant le blocage de la base tournante.

Le document US-A-3 338 622 décrit une base tournante pour siège de véhicule automobile, qui est fonctionnellement équivalente à celle du préambule de la revendication indépendante excepté que des glissières de réglage longitudinal du siège n'y sont pas décrites.

Conformément à l'invention, la base tournante à sécurité permettant la rotation de 180° d'un siège dans un véhicule automobile ou analogue dans laquelle le plateau fixe portant le siège est solidaire des glissières de réglage longitudinal du siège, ce plateau supportant, d'une part, une coupelle tournante par l'intermédiaire d'un roulement à billes et, d'autre part, un couvercle solidaire du plateau fixe et séparé de la coupelle par un roulement à billes, cet ensemble étant centré sur les deux rangées de billes, est caractérisée en ce que le déplacement d'une tige est commandé par un levier articulé sur un axe solidaire du plateau, le levier se terminant par une fourche coopérant, d'une part, avec la tête de la tige et, d'autre part, avec une rondelle séparée de la tête par un ressort concentrique à la tige afin d'actionner, dans un sens, deux verrous verrouillant normalement la coupelle tournante supportant le siège pour libérer celui-ci lors d'une rotation de 180°, mais seulement lorsque le siège est en position avancée vers l'avant du véhicule après déverrouillage des glissières par l'intermédiaire d'un verrou classique soumis à l'action inverse du levier agissant sur des bras, le recul d'un autre verrou de la base tournante étant assuré par le basculement du dossier, sur l'assise du siège considéré.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 montre le siège dans la position d'utilisation tournée dans le sens de la marche du véhicule.

La fig. 2 est une élévation du siège déplacé vers l'avant du véhicule, avant sa rotation de 180°.

La fig. 3 est une vue de dessus du mécanisme de base tournante en partie arrachée, la base tournante étant bloquée.

La fig. 4 est une vue correspondant à la fig. 3 dans une position définie juste avant la rotation de 180° du siège.

La fig. 5 est une vue correspondant aux fig. 3 et 4 au moment de la rotation de 180° du siège.

La fig. 6 est une coupe-élévation prise sensiblement suivant la ligne VI-VI de la fig. 7.

La fig. 7 est une coupe longitudinale du mécanisme.

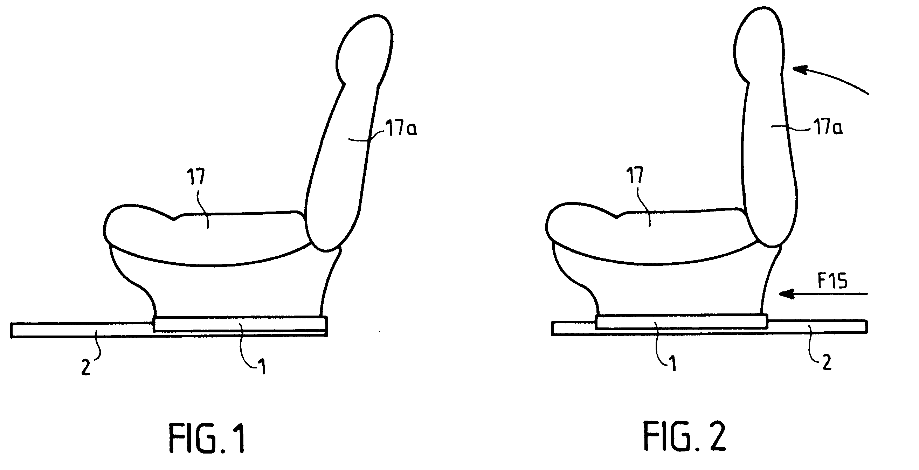

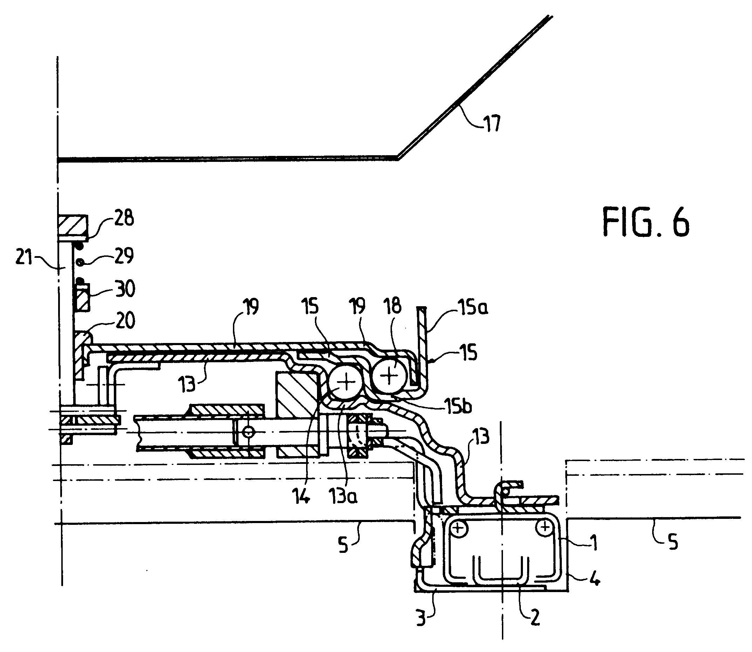

Aux dessins et notamment aux fig. 1 à 3 est schématisé le dessus du profilé mobile supérieur 1 d'une glissière dont on voit, à la fig. 6, le profilé inférieur 2 qui repose sur une ferrure 3.

Comme dans tous les montages de sièges d'automobile, les glissières sont placées longitudinalement de part et d'autre du siège, soit sur, soit dans des couloirs longitudinaux 4 prévus dans le plancher 5 du véhicule.

Le dessus du profilé mobile supérieur 1 porte un verrou coulissant 6 présentant sur le côté intérieur une protubérance 7 destinée à coopérer avec une rampe 8 présentant un ajour 8a. De plus, le verrou 6 comporte un dégagement 9.

Ce verrou est soumis à l'action d'une lame-ressort 10 tendant à le repousser, dans le sens de la flèche F10, de façon que la protubérance 7 soit toujours en contact avec la rampe 8 disposée parallèlement à la glissière 1-2.

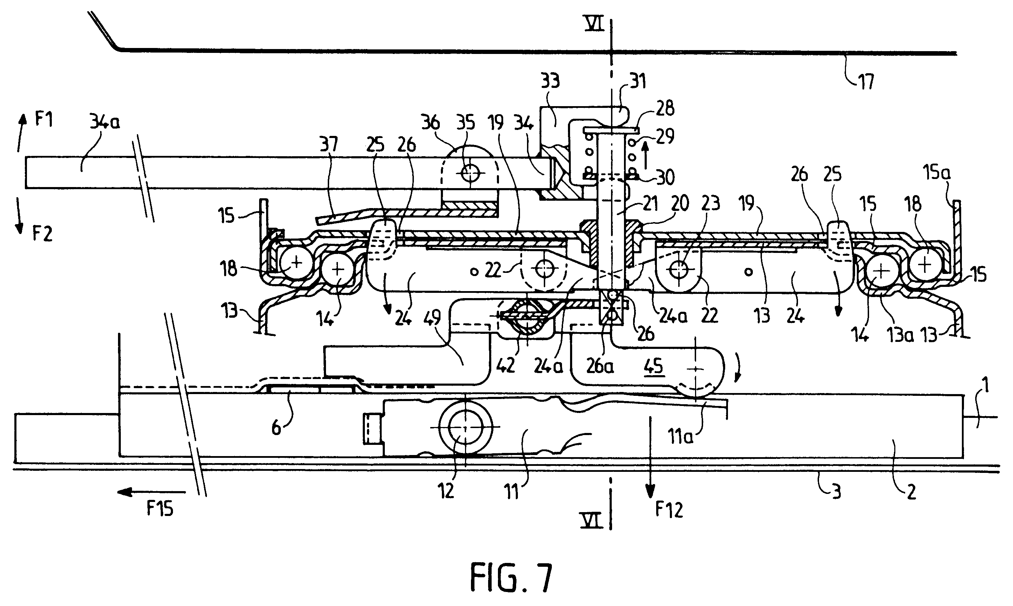

Comme on le voit à la fig. 7, la glissière comporte un verrou classique 11 articulé sur un axe 12 de façon connue en soi, ce verrou 11 présentant un peigne coopérant avec une denture portée par le profilé inférieur 2 de la glissière pour rendre le profilé supérieur 1 normalement solidaire du profilé inférieur 2 fixe.

Un ressort, non représenté, agissant sur l'extrémité 11a dudit verrou 11, tend à faire pivoter ce verrou dans le sens inverse de la flèche F12.

Ce montage n'est pas plus détaillé car il est classique.

Le dessus du profilé supérieur mobile 1 porte un plateau fixe 13 conformé en 13a pour recevoir des billes 14 recouvertes par une coupelle tournante 15 dont le pourtour 15a supporte le siège 17 figuré schématiquement à la fig. 6 et à la fig. 7.

La coupelle tournante 15 présente un chemin de roulement 15b contenant des billes 18 maintenues par un couvercle 19 de façon que la coupelle tournante 15 soit guidée horizontalement lorsqu'elle tourne sur elle-même comme cela a été décrit et représenté dans la demande de brevet français N° 91 06234 du 23 mai 1991.

Comme on peut s'en rendre compte à la fig. 7, le couvercle 19 est centré sur les billes 18 qui, elles-mêmes, sont centrées sur le plateau mobile 15 par les billes 18, ledit plateau étant lui-même centré par les billes 14 qui se centrent sur le plateau fixe 13. Une bague 20 solidaire du plateau 19 permet le coulissement de la tige 21.

Le plateau fixe 13, solidaire de la partie coulissante de chaque glissière, comporte des pattes 22 portant des axes 23 sur lesquels sont articulés des verrous 24 terminés par des doigts verticaux 25 traversant des trous 26 diamétralement opposés, percés dans le couvercle 19 ainsi que dans le plateau tournant 15 et le plateau fixe 13.

La queue 24a des verrous 24 repose sur une goupille 26 solidaire de l'axe coulissant 21. Ce dernier se termine, à sa partie supérieure, par une tête 28 et autour de l'axe coulissant 21, est disposé un ressort 29 tendant à abaisser une rondelle 30.

La tête 28 et la rondelle 30 sont placées entre des doigts 31 et 32 du cavalier 33 fixé à l'extrémité d'une tige 34 formant un levier articulé sur un axe 35. La partie avant 34a de la tige 34 est normalement munie d'une poignée de manoeuvre.

L'axe 35 repose dans un support 36 solidaire d'une plaque 37 faisant corps avec le plateau fixe 13.

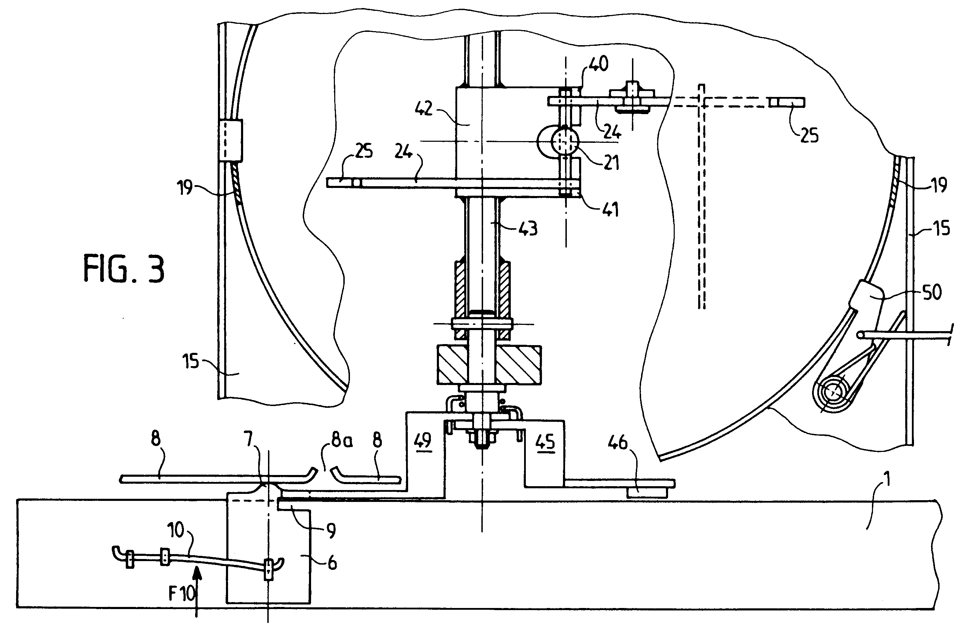

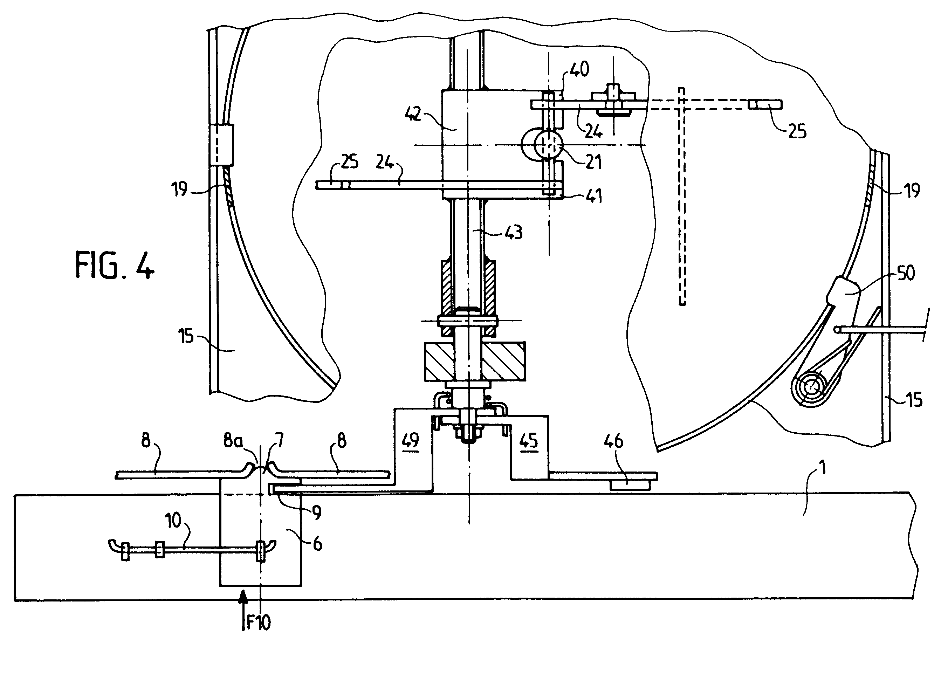

Finalement, l'axe coulissant vertical 21 présente, à sa partie inférieure, une deuxième goupille 26a qui emprisonne les parties terminales 40 et 41 d'une fourche 42 (fig. 3, 4, 5), montée fixe sur un arbre 43 portant, à chacune de ses extrémités, un bras coudé, à savoir d'un côté, un bras coudé 45 qui est terminé par un renfort 46 coopérant avec l'extrémité arrière du verrou classique 11, et de l'autre côté un deuxième bras coudé 49 un doigt duquel peut descendre dans le dégagement 9 du verrou coulissant 6, placé sur le dessus du profilé mobile supérieur 1 de chaque glissière.

Lorsqu'on désire faire pivoter le siège 17 monté sur cette base pivotante, on commence d'abord, comme cela est représenté à la fig. 2 , par faire avancer ce siège 17 vers l'avant du véhicule en soulevant, par l'extrémité 34a (Fig. 7), la tige 34 qui, en pivotant autour de l'axe 35, provoque par l'intermédiaire du doigt 31 du cavalier 33 l'abaissement de la tige 21 donc l'abaissement des goupilles 26 et 26a, entraînant le mouvement de rotation de la fourche 42, de l'arbre 43 et du bras coudé 45, en libérant ainsi le profilé mobile supérieur 1 par rapport au profilé fixe inférieur 2 de chaque glissière puisque les verrous 11 sont abaissés dans le sens de la flèche F12.

A un point précis réalisé sur le mécanisme, le déplacement du verrou coulissant 6 sous l'action du ressort 10 permet l'indexage de la protubérance 7 par rapport à l'ajour 8a de la rampe 8.

Le siège est amené alors dans la position définie par coulissement dans le sens de la flèche F15 (voir fig. 2 et 7) des profilés supérieurs 1 des glissières.

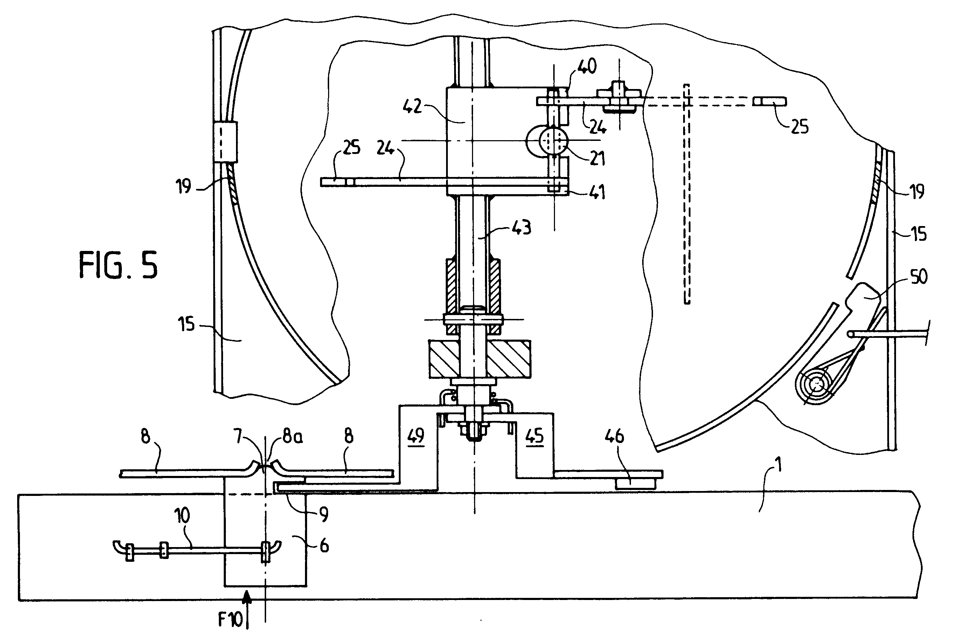

A ce moment, par pivotement du dossier 17a du siège 17, un verrou 50 (voir fig. 3, 4 et 5) se dégage de la coupelle fixe 19 en libérant ainsi totalement le plateau tournant 15. Lorsque le verrou 50 est dans la position représentée à la fig. 5, on abaisse alors la tige 34 dans le sens de la flèche F2 (voir fig. 7). Ceci a pour effet de soulever l'axe coulissant 21 sous l'action du cavalier 33 en provoquant ainsi, par l'intermédiaire de la goupille 26a, la sortie des doigts verticaux de verrouillage 25 des ouvertures percées dans le couvercle 19, le plateau fixe 13 et le bord interne de la coupelle tournante 15 en libérant ainsi celle-ci. On peut, à ce moment, faire effectuer au siège 17 une rotation de 180°. Cette opération est permise par le passage dudit doigt du deuxième bras coudé 49 dans le dégagement 9 de la pièce 6.

En remettant en place le dossier 17a du siège, le verrou 50 retrouve alors sa position dans laquelle il bloque la coupelle tournante 15.

Il suffit alors de ramener le siège dans la position voulue par coulissement des profilés supérieurs 1 en soulevant la tige 34 (Flèche F1, fig. 7).

Il y a lieu de noter cependant que, dans le cas où une action malencontreuse est entreprise sur la tige 34 par exemple dans le sens de la flèche F2 (voir fig. 7) et que le verrou coulissant 6 n'est pas bloqué dans l'ajour 8a, le mouvement ainsi provoqué n'a pour effet que de comprimer le ressort 29 sans permettre le déplacement de l'axe coulissant 21.

## Revendications

1. Base tournante à sécurité permettant la rotation de 180° d'un siège dans un véhicule automobile ou analogue dans laquelle le plateau fixe (13) portant le siège (17) est solidaire des glissières (1, 2) de réglage longitudinal du siège, ce plateau (13) supportant, d'une part, une coupelle tournante (15) par l'intermédiaire d'un roulement à billes (14) et, d'autre part, un couvercle (19), solidaire du plateau fixe (13) et séparé de la coupelle (15) par un roulement à billes (18), cet ensemble étant centré sur les deux rangées de billes, caracterisée en ce que le déplacement d'une tige (21) est commandé par un levier (34) articulé sur un axe (35) solidaire du plateau (13), le levier (34) se terminant par une fourche (33) coopérant, d'une part, avec la tête (28) de la tige (21) et, d'autre part, avec une rondelle (30) séparée de la tête (28) par un ressort (29) concentrique à la tige afin d'actionner, dans un sens, deux verrous (24) verrouillant normalement la coupelle tournante (15) supportant le siège (17) pour libérer celui-ci lors d'une rotation de 180°, mais seulement lorsque le siège est en position avancée vers l'avant du véhicule après déverrouillage des glissières par l'intermédiaire d'un verrou classique (11) soumis à l'action inverse du levier (34) agissant sur des bras (45 ; 49), le recul d'un autre verrou (50) de la base tournante étant assuré par le basculement du dossier sur l'assise du siège considéré (17).

2. Base tournante suivant la revendication 1, caractérisée en ce que le déverrouillage des glissières par les bras (45 ; 49) se fait sous le contrôle d'un verrou coulissant (6) à protubérance (7) se déplaçant avec le profile supérieur (1) de chaque glissière (1, 2), le verrou (6) coopérant avec une rampe (8) tandis que le bras (49) peut se placer dans un dégagement (9) du verrou (6) en assurant ainsi un fonctionnement correct et sûr de la base tournante.

## Claims

1. Revolving safety base allowing 180° rotation of a seat in an automobile vehicle or the like in which the fixed platform (13) carrying the seat (17) is rigidly connected to the slide rails (1, 2) for longitudinal adjustment of the seat, this platform (13) supporting on the one hand a revolving dish (15) by means of a ball bearing (14) and on the other hand a cover (19) rigidly connected to the fixed platform (13) and separated from the dish (15) by a ball bearing (18), this assembly being centred on the two rows of balls, characterised in that the displacement of a rod (21) is controlled by a lever (34) pivotably connected to a spindle (35) rigidly connected to the platform (13), wherein the lever (34) ends in a fork (33) cooperating on the one hand with the head (28) of the rod (21) and on the other hand with a washer (30) separated from the head (28) by a spring (29) concentric with the rod so as to actuate, in one direction, two bolts (24) normally locking the revolving dish (15) supporting the seat (17) in order to release the latter upon 180° rotation, but only when the seat is in a position advanced towards the front of the vehicle after unlocking the slide rails by means of a conventional bolt (11) subject to the reverse action of the lever (34) acting on arms (45; 49), withdrawal of another bolt (50) of the revolving base being ensured by tilting of the back on the seat portion of the seat in question (17).

2. Revolving base according to claim 1, characterised in that unlocking of the slide rails by the arms (45; 49) is performed under the control of a sliding bolt (6) with a protuberance (7) moving with the upper profile (1) of each slide rail (1, 2), the bolt (6) cooperating with a ramp (8) while the arm (49) can be placed in an undercut (9) of the bolt (6), thus ensuring correct and reliable functioning of the revolving base.

## Patentansprüche

1. Drehbarer Sicherheitsunterbau zur 180 Grad-Drehung eines Sitzes in einem Kraftfahrzeug oder dergleichen, bei welchem die feste, den Sitz (17) tragende Platte (13) mit Gleitführungen (1, 2) zur Längseinstellung des Sitzes verbunden ist, wobei diese Platte (13) einerseits eine drehbare Schale (15) mittels eines Kugellagers (14) und andererseits einen, mit der festen Platte (13) verbundenen und von der Schale (15) durch ein Kugellager (18) getrennten Deckel (19) trägt, und diese Anordnung auf den zwei Kugelreihen zentriert ist,
**dadurch gekennzeichnet**,
daß die Verschiebung eines Schaftes (21) durch einen, auf einer mit der Platte (13) verbundenen Achse (35) angelenkten Hebel (34) angetrieben ist, wobei der Hebel (34) in einer Gabel (33) endet, die einerseits mit dem Kopf (28) des Schaftes (21) und andererseits mit einer von dem Kopf (28) durch eine konzentrisch um den Schaft angeordnete Feder (29) beabstandeten Scheibe (30) zusammenwirkt, um in einer Richtung zwei Riegel (24), die normalerweise die den Sitz (17) tragende drehbare Schale (15) verriegeln, zu betätigen, um dieses für eine Rotation um 180 Grad freizugeben, jedoch nur wenn sich der Sitz nach der Entriegelung der Gleitführungen mittels eines ansich bekannten Riegels (11), in einer gegen das Vorderteil des Kraftfahrzeuges vorgeschobenen Stellung befindet, wobei der Riegel (11) der entgegengerichteten Betätigung des auf Arme (45; 49) wirkenden Hebels (34) unterworfen ist, und das Kippen der Rückenlehne gegenüber der Sitzfläche des entsprechenden Sitzes (17) für das Zurückziehen eines anderen Riegels (50) des drehbaren Unterbaus sorgt.

2. Drehbarer Sicherheitsunterbau nach Anspruch 1, dadurch gekennzeichnet, daß die Entriegelung der Gleitführungen durch die Arme (45; 49) in Abhängigkeit von einem gleitend geführten Riegel (6) mit einem Vorsprung (7) stattfindet, der sich mit der oberen Profilschiene (1) jeder Gleitführung (1, 2) verschiebt, wobei der Riegel (6) mit einer Rampe (8) zusammenwirkt, während der Arm (49) in einer Aussparung (9) des Riegel (6) sich plazieren kann, um so einen fehlerfreien und zuverlässigen Betrieb des drehbaren Unterbaus zu gewährleisten.
